# EUROPEAN PATENT SPECIFICATION

(11) **EP 3 825 875 B1**
(45) Date of publication and mention of the grant of the patent: **22.11.2023**
(21) Application number: 19855863.7
(22) Date of filing: 02.07.2019
(51) Int. Cl.: G06F 16/908, G06F 16/906, G06Q 10/063, G06Q 10/087, G06Q 10/20

(54) **INSTALLATION ENVIRONMENT ESTIMATION DEVICE AND PROGRAM**
VORRICHTUNG UND PROGRAMM ZUR SCHÄTZUNG EINER INSTALLATIONSUMGEBUNG
DISPOSITIF ET PROGRAMME D'ESTIMATION D'ENVIRONNEMENT D'INSTALLATION

(30) Priority: 31.08.2018 JP 2018162403
(43) Date of publication of application: 26.05.2021
(73) Proprietor: Mitsubishi Electric Corporation, Tokyo 100-8310 (JP)
(72) Inventor: KAWASAKI, Jin, Tokyo 100-8310 (JP); FUKUOKA, Naoya, Tokyo 100-8310 (JP); KOMATSU, Kazuhiro, Tokyo 100-0006 (JP); TASAKI, Nobuaki, Tokyo 100-0006 (JP); MEGA, Toshihiro, Tokyo 100-0006 (JP)
(74) Representative: Pfenning, Meinig & Partner mbB
(86) International application number: PCT/JP2019/026358
(87) International publication number: WO 2020/044779

(56) References cited:
- JP-A- 2009 110 054
- JP-A- 2011 259 575
- JP-A- 2017 173 262
- US-A1- 2008 244 314
- US-B1- 7 851 758
- Anonymous: "Carbon Dioxide Concentration - Comfort Levels", , 15 September 2017 (2017-09-15), XP055959078, Retrieved from the Internet: URL:https://web.archive.org/web/2017091511 3801/https://www.engineeringtoolbox.com/co 2-comfort-level-d_1024.html [retrieved on 2022-09-08]

## Description

### Technical Field

The present invention relates to an installing environment estimation device and a program and, more particularly, to estimation of an environment where equipment is installed.

### Background Art

In order to monitor equipment such as electrical equipment and lighting equipment installed in a facility such as a building, it is necessary to accurately grasp a present state of the equipment. For this purpose, attribute information such as a manufacturer, model, and serial number of the equipment is acquired by extracting them from a photographed image of the equipment.

Also, information sent by the equipment, and sensor data and operating conditions from the equipment or various sensors installed around the equipment are collected. Then, the state of the equipment is grasped by analyzing the collected information, its history information, and so on.

US 7851758 B1 discloses a portable inspection system to capture inspection data, such as for example an infrared image, sound information, and/or electrical measurement information. The inspection data may be securely recorded (e.g., with an encryption algorithm) along with associated information, which may include for example date, time, system settings, operator identification, and location.

### Citation List

### Patent Literature

Patent Literature 1: JP 2002-062252
Patent Literature 2: JP 2004-362103
Patent Literature 3: JP 2007-187552
Patent Literature 4: JP 2009-251822
Patent Literature 5: JP 2011-090593
Patent Literature 6: WO 2017/017956

### Summary of Invention

### Technical Problem

It can be inferred easily that among equipment of the same model that are operated in the same way, a state of equipment installed at, for example, a place where a relatively large amount of dust is generated, a place with poor aeration, or a place exposed to direct rays of the sun will become worse than a state of equipment installed at other places. In this manner, the state of the equipment may differ depending on the environment of the place where the equipment is installed.

It may be possible to grasp the installing environment of the equipment if, for example, a maintenance personnel member records it in maintenance and inspection, or conducts patrol. However, information (for example, the installing environment is good/bad) collected and recorded manually is subjective and may involve individual differences.

It is an objective of the present invention to estimate an installing environment of equipment more objectively by utilizing data collected by an apparatus.

### Solution to Problem

The present invention is as defined in the appended set of claims.

### Advantageous Effects of Invention

According to the present invention, it is possible to estimate an installing environment of equipment more objectively by utilizing data collected by an apparatus.

### Brief Description of Drawings

Fig. 1 is a block configuration diagram illustrating an installing environment estimation device according to Embodiment 1.
Fig. 2 is a hardware configuration diagram of the installing environment estimation device according to Embodiment 1.
Fig. 3 is a flowchart illustrating installing environment estimation processing according to Embodiment 1.
Fig. 4 is a diagram illustrating an example of a data configuration of a classification model according to Embodiment 1.
Fig. 5 is a block configuration diagram illustrating an installing environment estimation device according to Embodiment 2.
Fig. 6 is a diagram illustrating an example of a data configuration of installing environment estimation information which is set in an installing environment estimation information storage unit according to Embodiment 2.
Fig. 7 is a diagram illustrating an example of the data configuration of the installing environment estimation information which is sequel to that of Fig. 6.
Fig. 8 is a conceptual diagram illustrating an example of an installing environment estimation method according to Embodiment 2.
Fig, 9 is a conceptual diagram illustrating another example of the installing environment estimation method according to Embodiment 2.
Fig. 10 is a conceptual diagram illustrating still other example of the installing environment estimation method according to Embodiment 2.
Fig. 11 is a conceptual diagram illustrating yet still other example of the installing environment estimation method according to Embodiment 2.
Fig. 12 is a block configuration diagram illustrating an installing environment estimation device according to Embodiment 3.
Fig. 13 is a diagram illustrating an example of a data configuration of attribute information which is set in an attribute information storage unit according to Embodiment 3.
Fig. 14 is a diagram illustrating an example of a data configuration of a diagnosis rule which is set in a diagnosis rule storage unit according to Embodiment 3.
Fig. 15 is a flowchart illustrating failure sign diagnosis processing according to Embodiment 3.
Fig. 16 is a block configuration diagram illustrating an installing environment estimation device according to Embodiment 4.
Fig. 17 is a diagram illustrating an example of a data configuration of attribute information which is set in an attribute information storage unit according to Embodiment 4.
Fig. 18 is a flowchart illustrating installing environment estimation processing according to Embodiment 4.
Fig. 19 is a block configuration diagram illustrating an installing environment estimation device according to Embodiment 5.
Fig. 20 is a block configuration diagram illustrating an installing environment estimation device according to Embodiment 6.
Fig. 21 is a block configuration diagram illustrating an installing environment estimation device according to Embodiment 7.
Fig. 22 is a block configuration diagram illustrating an installing environment estimation device according to Embodiment 8.
Fig. 23 is a diagram illustrating an example of Embodiment 8 where installing environment information is displayed as three-dimensional CAD data.
Fig. 24 is a diagram illustrating an example of Embodiment 8 where the installing environment information is displayed as two-dimensional CAD data.
Fig. 25 is a diagram supplementing a hardware configuration of an installing environment estimation device according to Embodiment 9.

### Description of Embodiments

Preferred embodiments of the present invention will be described below with referring to drawings.

### Embodiment 1.

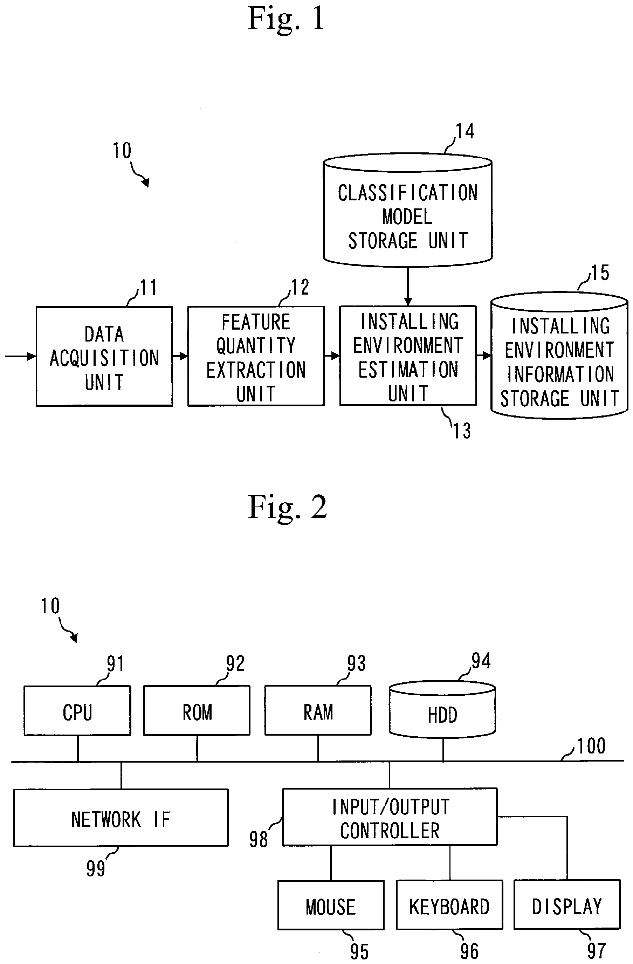

Fig. 1 is a block configuration diagram illustrating an installing environment estimation device according to an embodiment of the present invention. An installing environment estimation device 10 according to the present embodiment is implemented by a computer installed in a surveillance center or the like which monitors equipment installed in a facility such as a building. The installing environment estimation device 10 according to the present embodiment analyzes data collected at a site where the equipment is installed in a manner to be described later in detail. The installing environment estimation device 10 is characterized in that it objectively estimates an environment of a place where the equipment is set, that is, an installing environment of the equipment, by analyzing the data. The data which is an analysis target is basically data acquired by an apparatus brought to the site by a maintenance personnel member or the like. The apparatus is assumed to be a photographing means such as various sensors and cameras. Particularly, the present embodiment assumes a mobile terminal carried by the maintenance personnel member, for example, a smartphone or a tablet terminal. Various apparatuses such as sensors and cameras mounted in the mobile terminal, and a positioning means such as a Global Positioning System (GPS) are utilized effectively. This does not mean to exclude data acquired by an apparatus other than a mobile terminal. Data acquired by an apparatus such as a sensor built in the facility and a sensor installed in a vicinity of the equipment may be utilized.

Fig. 2 is a hardware configuration diagram of the computer that constitutes the installing environment estimation device 10 according to the present embodiment.

The installing environment estimation device 10 according to the present embodiment can be implemented by a conventionally existing versatile hardware configuration such as a personal computer (PC). That is, the installing environment estimation device 10 is constituted by connecting an input/output controller 98 and a network interface (IF) 99 which is provided as a communication means, to an internal bus 100. The input/output controller 98 connects a CPU 91, a ROM 92, a RAM 93, a hard disk drive (HDD) 94, a mouse 95 and a keyboard 96 which are provided as input means, and a display 97 provided as a display means, which are illustrated in Fig. 2, to each other.

Getting back to the description of Fig. 1, the installing environment estimation device 10 according to the present embodiment has a data acquisition unit 11, a feature quantity extraction unit 12, an installing environment estimation unit 13, a classification model storage unit 14, and an installing environment information storage unit 15,

Constituent elements not used for describing the present embodiment are not illustrated in the drawing.

The data acquisition unit 11 acquires data collected by the apparatus described above and concerning the equipment being a monitoring target.

In the present embodiment, the installing environment estimation device 10 estimates an installing environment of the equipment based on the data acquired by the data acquisition unit 11. Accordingly, the "data concerning equipment" which is acquired by the data acquisition unit 11 is data which, by being analyzed, allows estimation of the installing environment of the equipment. The feature quantity extraction unit 12 analyzes the data acquired by the data acquisition unit 11, to thereby extract a feature quantity of the data. The installing environment estimation unit 13 collates the feature quantity of the data which is extracted by the feature quantity extraction unit 12 with a classification model being set in the classification model storage unit 14, to thereby estimate the installing environment of the equipment, and saves an estimation result to the installing environment information storage unit 15 as installing environment information.

Various classification models are set and registered in the classification model storage unit 14. Each classification model is set in advance for each item of the feature quantity of an individual apparatus.

For example, when the apparatus is a camera, the camera obtains a photographed image as data. The installing environment estimation device 10 analyzes the photographed image so that a dirty degree (dirty area) of a photographing range (installing place of the equipment), an installation area (equipment area) of the equipment occupying the photographing range, or the like can be extracted as the feature quantity. That is, each of the dirty area and the equipment area is the item of the feature quantity. Description on a specific example of the classification model will be given together with description on processing.

The data acquisition unit 11, feature quantity extraction unit 12, and installing environment estimation unit 13 which are constituent elements of the installing environment estimation device 10 are implemented by a cooperative operation of the computer which constitutes the installing environment estimation device 10 and a program which runs in the CPU 91 mounted in the computer. The classification model storage unit 14 and the installing environment information storage unit 15, which are each a storage unit, are implemented by the HDD 94 mounted in the installing environment estimation device 10.

Alternatively, the RAM 93, or an external storage means via a network may be utilized as the classification model storage unit 14 and the installing environment information storage unit 15.

The program employed in the present embodiment can naturally be provided by a communication means but can also be stored in a computer readable recording medium such as a CD-ROM and a USB memory and provided in the form of the recording medium. The program provided by the communication means or the recording medium is installed in the computer. Various processes are implemented as the CPU 91 of the computer executes the program in order.

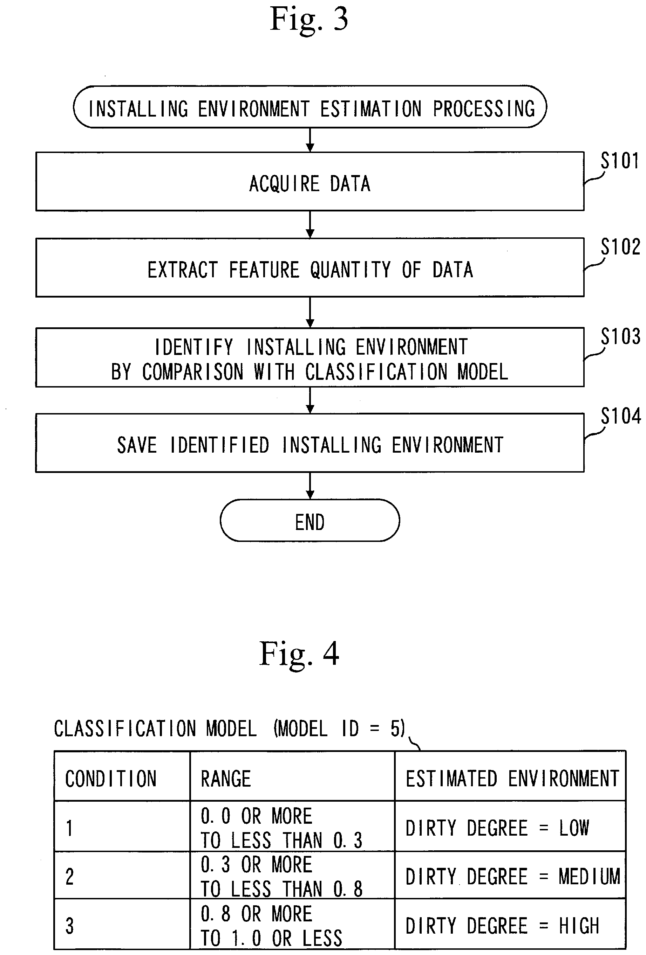

Installing environment estimation processing practiced by the installing environment estimation device 10 of the present embodiment will now be described with referring to a flowchart illustrated in Fig. 3.

The maintenance personnel member of the equipment, upon arriving at the facility, goes to an installation position of the equipment being an estimation target of the installing environment. Then, the maintenance personnel member activates predetermined application software of a mobile terminal he or she carries, and collects data on the equipment installing place utilizing the sensors and cameras incorporated in the mobile terminal. For example, the maintenance personnel member photographs the equipment using the cameras, and sends the photographed image to the installing environment estimation device 10 utilizing email or the like.

Note that the maintenance personnel member may sometimes photograph a plurality of pieces of equipment in a photographing range.

In the installing environment estimation device 10, the data acquisition unit 11 receives data sent from the mobile terminal to thereby acquire the data of the installing place of the equipment (step 101). The feature quantity extraction unit 12 analyzes the data to extract the feature quantity of the data (step 102). In the present embodiment, it is determined in advance to extract a feature quantity of which item once an apparatus that has collected the data is identified. Accordingly, it is also known in advance which classification mode the installing environment estimation unit 13 is to refer to.

Therefore, when the feature quantity extraction unit 12 extracts a feature quantity of the data, the installing environment estimation unit 13 reads a corresponding classification model from the classification model storage unit 14. Then, the installing environment estimation unit 13 collates the readout classification model with the feature quantity of the data so as to identify the installing environment of the equipment (step 103).

The installing environment of the equipment is identified by a following scheme.

Fig. 4 is an example of the classification model of a case where the apparatus is a camera and the feature quantity is a dirty area. The installing environment (estimated environment) that can be estimated in the classification model illustrated in Fig. 4 has three dirty degree grades of low, medium, and high. A possible range that the feature quantity can have is set for each of the three dirty degree grades.

The feature quantity extraction unit 12 analyzes the photographed image to extract a dirty level (dirty degree) contained in the photographing range, as a feature quantity. To detect a dirty level from the photographed image, a conventional scheme may be used. The feature quantity extraction unit 12 detects, for example, out of the photographing range indicated by the photographed image, a range estimated to be dirty. Then, the feature quantity extraction unit 12 calculates a proportion of the detected dirty range occupying in the photographing range. The feature quantity extraction unit 12 extracts this proportion as the feature quantity. The possible range of the feature quantity in this case is a range of 0 to 1. The installing environment estimation unit 13 compares a value of the feature quantity calculated by the feature quantity extraction unit 12 with a range that matches with a condition in the classification model, to thereby identify the corresponding estimated environment (installing environment of the equipment). In the present embodiment, the installing environment estimation unit 13 estimates the installing environment of the equipment by identifying the estimated environment which is set in the classification model based on the feature quantity of the data.

The installing environment estimation unit 13, when having estimated the estimated environment being set in the classification model based on the value of the feature quantity as described above, saves an estimation result to the installing environment information storage unit 15 as the installing environment information (step 104).

As described above, according to the present embodiment, the installing environment estimation device 10 can estimate the equipment installing environment that matches with the acquired data by comparison of the feature quantity of the data with the classification model.

### Embodiment 2.

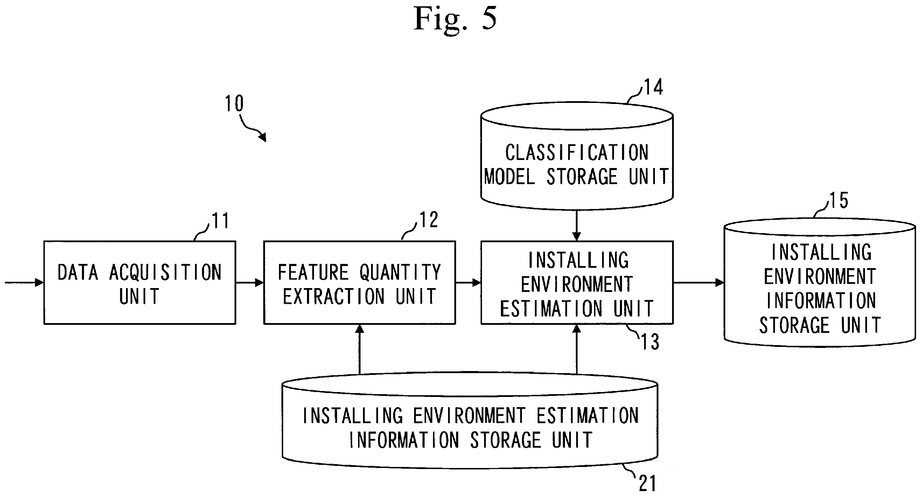

Fig. 5 is a block configuration diagram of an installing environment estimation device according to the present embodiment. An installing environment estimation device 10 according to the present embodiment has a configuration formed by adding an installing environment estimation information storage unit 21 to Embodiment 1. The same constituent element as its counterpart in Embodiment 1 will be denoted by the same reference sign, and its description will be omitted when appropriate. This applies to embodiments to be described later. A hardware configuration of the installing environment estimation device 10 may be the same as that of Embodiment 1. This applies to the embodiments to be described later.

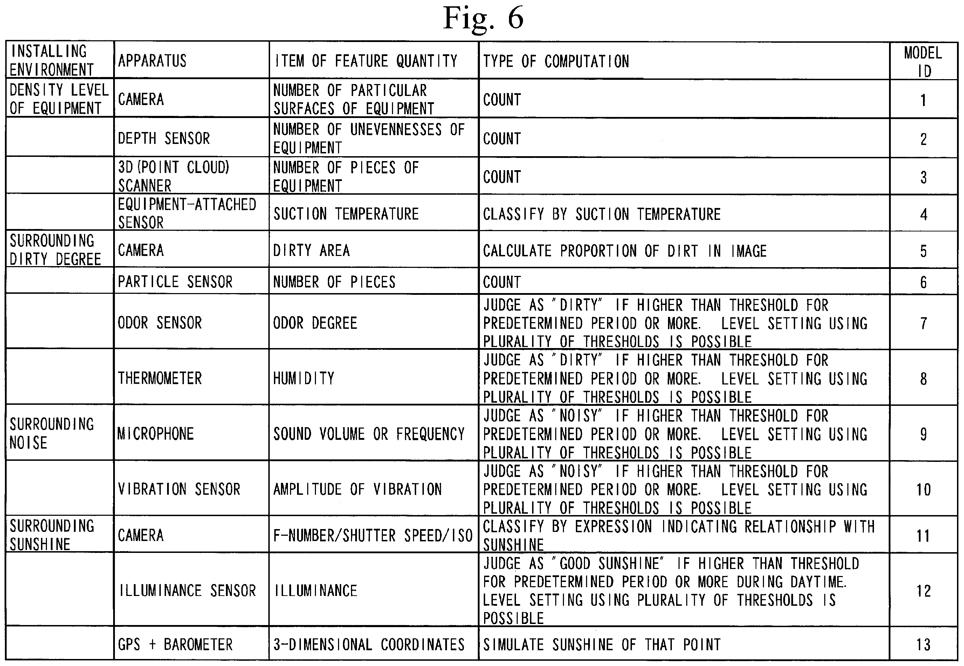

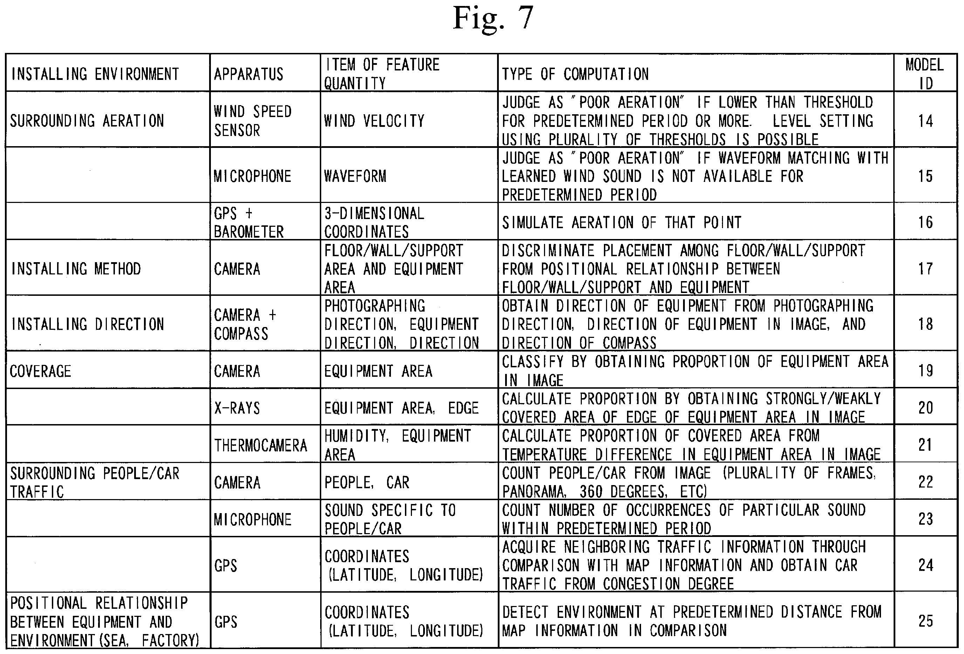

Figs. 6 and 7 are diagrams illustrating a data configuration example of installing environment estimation information which is stored in the installing environment estimation information storage unit 21 according to the present embodiment. The installing environment estimation information is generated by associating, to an installing environment of equipment being an estimation target, an apparatus to collect data which is to be utilized for estimation of the installing environment, an item of a feature quantity to be extracted from the data, a computation type indicating a scheme of calculating the feature quantity, and a model ID as identification information of a classification model. The installing environment estimation information storage unit 21 is implemented by an HDD 94 mounted in the installing environment estimation device 10. Alternatively, a RAM 93, or an external storage means via a network may be utilized.

Installing environment estimation processing to be practiced by the installing environment estimation device 10 of the present embodiment will now be described.

A basic flow of the processing may be the same as that of the flowchart (Fig. 3) presented in Embodiment 1.

Note that in Embodiment 1, a feature quantity of which item is to be extracted is determined in advance. In the present embodiment, the installing environment estimation device 10 refers to installing environment estimation information that defines a feature quantity of which item is to be extracted.

Specifically, when a data acquisition unit 11 acquires data, a feature quantity extraction unit 12 identifies an equipment installing environment that matches with an apparatus having collected the data, and an item of a feature quantity, by referring to the installing environment estimation information. The feature quantity extraction unit 12 may extract from the corresponding apparatus, all feature quantities that match with the installing environment defined in the installing environment estimation information, or may let an administrator or the like to select an installing environment to be estimated. For example, in a case where the acquired data is a photographed image obtained by a camera, according to a setting example of the installing environment estimation information illustrated in Fig. 6, it is possible to estimate a density level of equipment, a surrounding dirty degree, and surrounding sunshine, as the installing environment. The feature quantity extraction unit 12 selects at least one installing environment out of the enumerated ones, or causes the administrator to select the same, thereby extracting a feature quantity for estimating the installing environment.

When the feature quantity extraction unit 12 extracts the feature quantity of the data, an installing environment estimation unit 13 extracts model ID corresponding to the extracted feature quantity from the installing environment estimation information, and reads a classification model corresponding to the extracted model ID from a classification model storage unit 14. Then, the installing environment estimation unit 13 compares the feature quantity of the data with the readout classification model, thereby identifying an estimated environment (installing environment of the equipment). For example, assume that, since acquired data is a photographed image obtained by a camera, the feature quantity extraction unit 12 has extracted a feature quantity of a dirty area from the photographic image. In this case, the installing environment estimation unit 13 identifies an estimated environment concerning a surrounding dirty degree based on a classification model (Fig. 4) of model ID = 5 corresponding to the dirty area, thereby estimating the installing environment of the equipment.

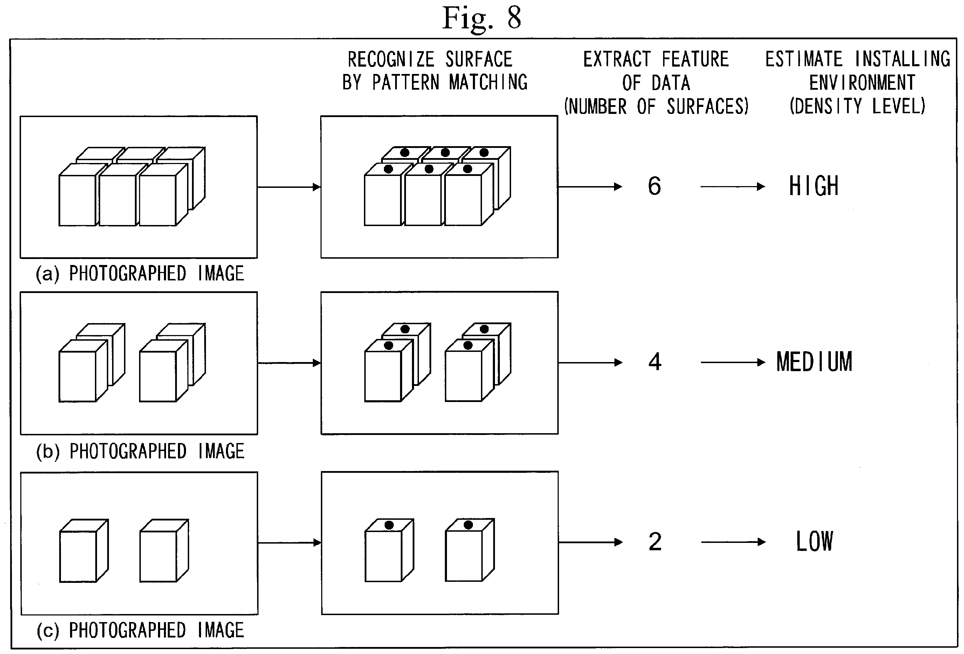

The installing environment estimation processing according to the present embodiment will now be specifically described with referring to schematic diagrams illustrated in Figs. 8 to 11.

First, assume that the data is a photographed image obtained by a camera. A case will be described where the feature quantity extraction unit 12 extracts, from the photographed image, a number of upper surfaces of the equipment as a feature quantity "a number of particular surfaces of the equipment", with referring to the installing environment estimation information. Assuming that the data acquisition unit 11 acquires the photographed image illustrated in (a) of Fig. 8, the feature quantity extraction unit 12 analyzes the photographed image to extract 6 as the feature quantity which is the number of upper surfaces of the equipment. Note that as a technique to extract the number of upper surfaces of the equipment from an image, an existing technique will be employed. The installing environment estimation unit 13 refers to a classification model (not shown) of model ID = 1 to thereby estimate that "a density level of the equipment" representing an installing environment of equipment is "high". Namely, the installing environment estimation unit 13 estimates that the density grade of the equipment is high, in other words, the equipment is installed in a dense place.

When a photographed image illustrated in (b) of Fig. 8 is obtained, also, the acquired photographed image is processed in the same manner as in the case where the photographed image illustrated in (a) of Fig. 8 is acquired. By processing in the same manner, the installing environment estimation unit 13 estimates that the "density level of the equipment" is "medium" from the extracted feature quantity = 4. When a photographed image illustrated in (c) of Fig. 8 is acquired, the installing environment estimation unit 13 estimates that the "density level of the equipment" is "low" from the extracted feature quantity = 2.

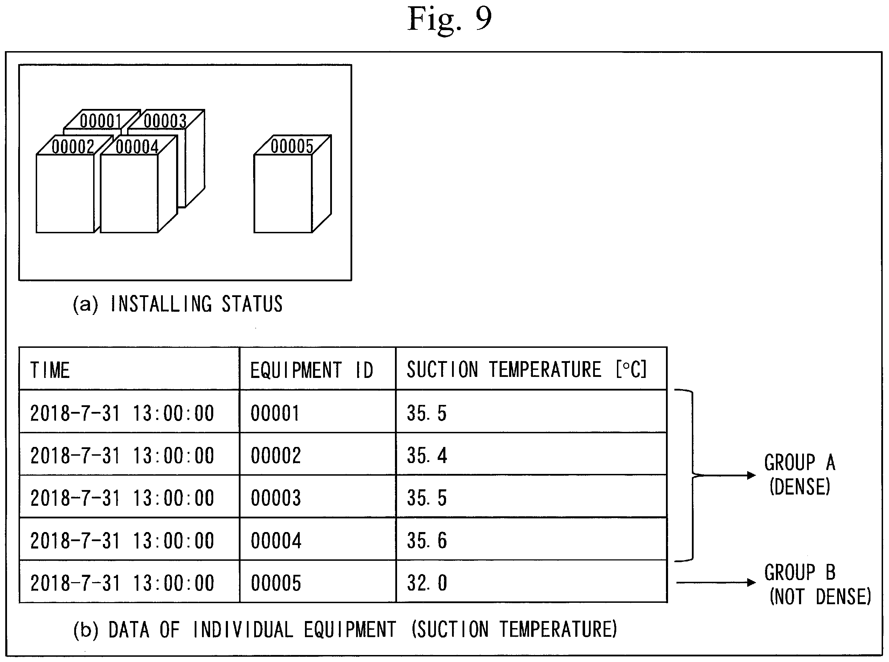

Regarding estimation of the "degree of density of the equipment" as the installing environment of the equipment as in Fig. 8, Fig. 9 illustrates estimation based on data concerning intake temperature of the equipment. An "equipment-attached sensor" in Fig. 6 signifies use of a sensor incorporated in the equipment. In this case, the data acquisition unit 11 acquires data from temperature sensors incorporated in a plurality of (five in the example indicated in Fig. 9) pieces of equipment. Then, based on the temperature sensors of the individual pieces of equipment from which the data acquisition unit 11 acquires the data, the feature quantity extraction unit 12 groups the plurality of pieces of equipment, that is, the installing places of the equipment, between a group consisting of four pieces of equipment and one group consisting of one piece of equipment. Then, the installing environment estimation unit 13 estimates that equipment is densely installed in the group which the four pieces of equipment belong to, and that equipment is not densely installed in the other group.

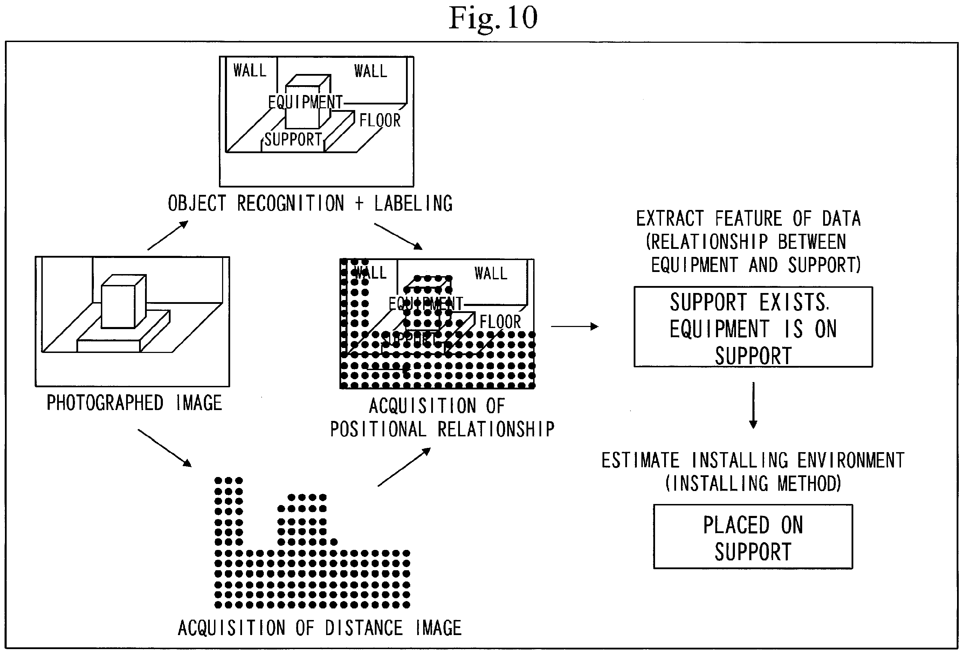

Subsequently, for a case where the data is a photographed image taken by a camera, description will be made on extraction of a relationship between the equipment and a support as a feature quantity "floor/wall/support and an equipment area" by the feature quantity extraction unit 12, from the photographed image with referring to the installing environment estimation information. Assuming that the data acquisition unit 11 has acquired the photographed image illustrated in Fig. 10, the feature quantity extraction unit 12 analyzes the photographed image to extract an object contained in the photographed image, and generates an image in which each object is labelled. Also, the feature quantity extraction unit 12 analyzes the photographed image and extracts a distance relationship among the objects contained in the photographed image to thereby generate a distance image. Then, the feature quantity extraction unit 12 extracts the above objects and collates an image in which each object is labelled, with the distance image, to thereby extract the existence of the support and the fact that the equipment is placed on the support, as the feature quantity representing the relationship between the equipment and the support. The installing environment estimation unit 13 refers to a classification model (not shown) of model ID = 17 to thereby estimate that the equipment is placed on a support, as the equipment installing environment.

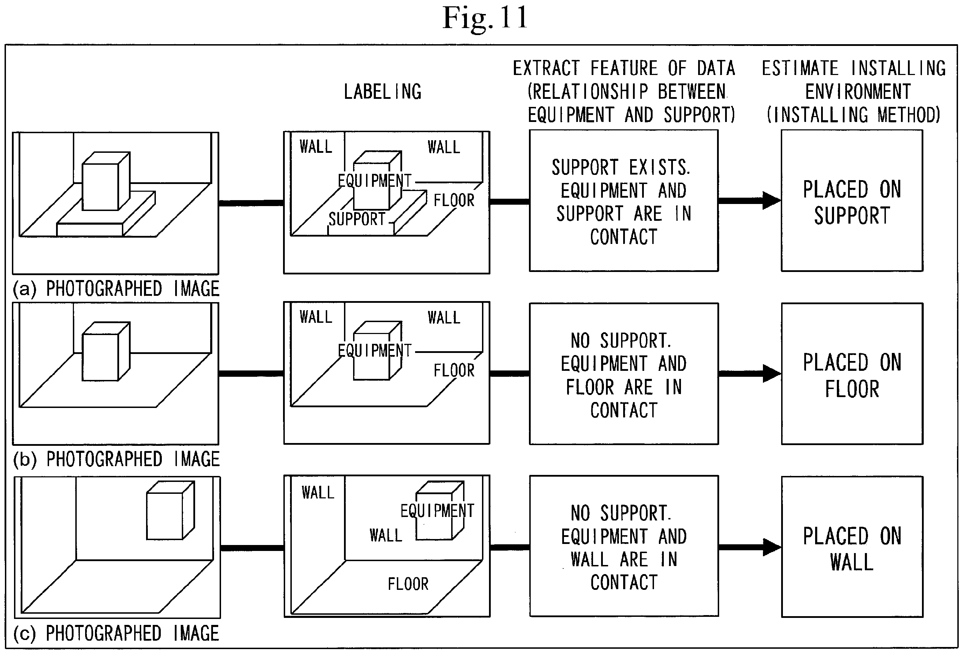

Fig. 11 illustrates a case of estimating, as an equipment installing environment, whether the equipment is placed on the floor, placed on the wall (hung from the wall), or placed on the support, from the photographed image, as in Fig. 10. A processing content of the feature quantity extraction unit 12 is the same as that of Fig. 10, and a detailed drawing and a detailed description will accordingly be omitted. To describe briefly, the feature quantity extraction unit 12 labels an object contained in the photographed image (identifies the equipment, the floor, the support, or the wall), and extracts the relationship between the equipment and the support, as a feature quantity, to thereby estimate the installing environment of the equipment.

As has been described above, in the present embodiment, the installing environment estimation device 10 can determine the feature quantity of data to be extracted, by referring to the installing environment estimation information, and can estimate the installing environment of the equipment based on the feature quantity of the data.

### Embodiment 3.

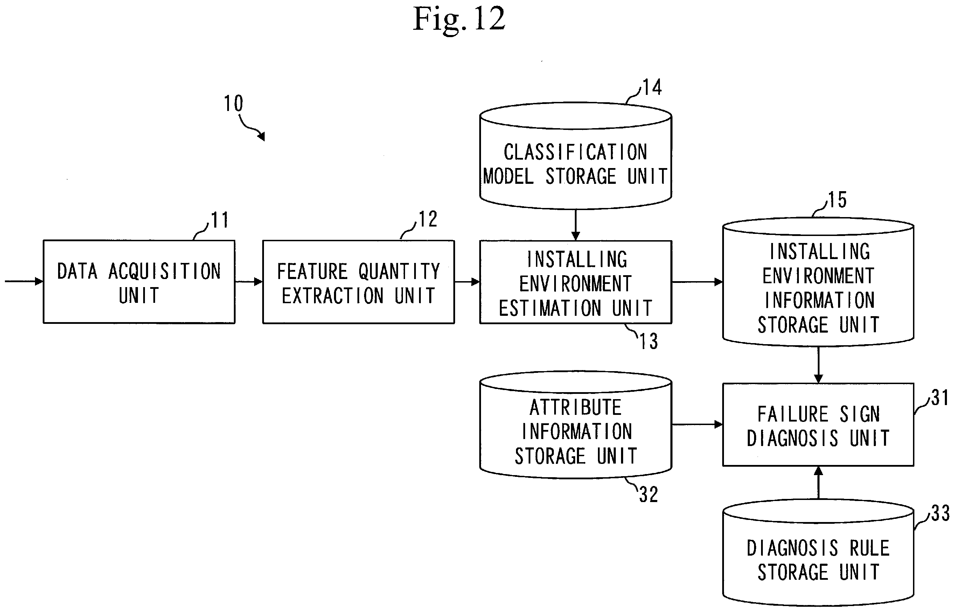

Fig. 12 is a block configuration diagram of an installing environment estimation device in the present embodiment. An installing environment estimation device 10 in the present embodiment has a configuration formed by adding a failure sign diagnosis unit 31, an attribute information storage unit 32, and a diagnosis rule storage unit 33 to Embodiment 1.

In the present embodiment, a sign of a failure of equipment is diagnosed with referring to an estimated installing environment of the equipment. In failure sign diagnosis, a threshold is set in advance, and installing environment information (a value represented by the equipment installing environment) is compared with the threshold to judge whether there is a sign of an equipment failure (that is, abnormal) or not (that is, normal). The failure sign diagnosis unit 31 diagnoses this sign (normal/abnormal) of the equipment failure.

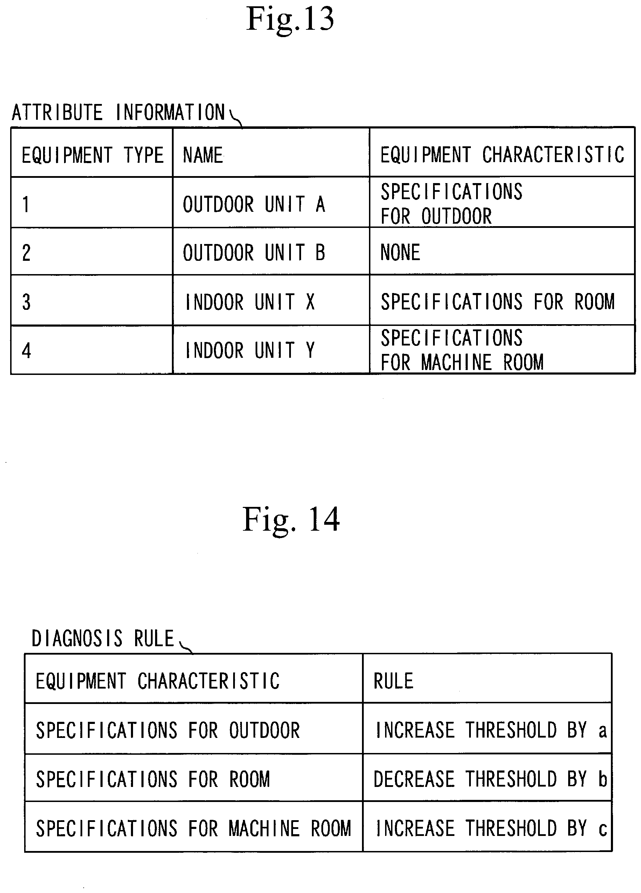

Fig. 13 is a diagram illustrating a data configuration example of attribute information which is set and registered in advance in the attribute information storage unit 32 of the present embodiment. The attribute information is set by associating, to an equipment type that identifies a type of equipment, a name of the equipment and an equipment characteristic. The equipment characteristic indicates an attribute of the equipment.

Fig. 14 is a diagram illustrating a data configuration example of a diagnosis rule which is set and registered in advance in the diagnosis rule storage unit 33 of the present embodiment. As stated before, the failure sign diagnosis unit 31 diagnoses a sign of a failure of equipment utilizing the threshold. A rule for changing the threshold is set in the diagnosis rule. This rule is set for each equipment characteristic.

The failure sign diagnosis unit 31 is implemented by a cooperative operation of a computer which forms the installing environment estimation device 10 and a program which runs in a CPU 91 mounted in the computer. The attribute information storage unit 32 and the diagnosis rule storage unit 33 which are each a storage unit are implemented by an HDD 94 mounted in the installing environment estimation device 10. Alternatively, a RAM 93, or an external storage means via a network may be utilized.

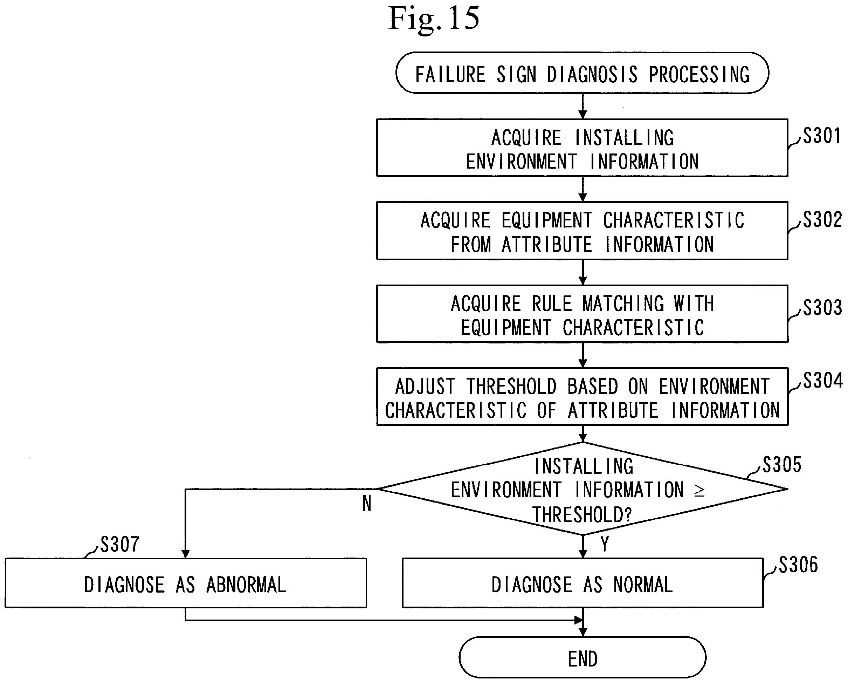

Failure sign diagnosis processing in the present embodiment will be described with referring to a flowchart illustrated in Fig. 15.

The failure sign diagnosis unit 31 acquires installing environment information of equipment being a diagnosis target, from an installing environment information storage unit 15 (step 301). Subsequently, the failure sign diagnosis unit 31 refers to the attribute information storage unit 32 to acquire an equipment characteristic that matches with the equipment type of the equipment being the diagnosis target (step 302). Subsequently, the failure sign diagnosis unit 31 refers to the diagnosis rule storage unit 33 to acquire a rule that matches with the acquired equipment characteristic (step 303).

Subsequently, the failure sign diagnosis unit 31 adjusts the threshold according to the acquired rule (step 304). The preset threshold is a standard, average value that is common to every equipment. For example, when the equipment is an indoor unit Y, if the indoor unit has specifications for a machine room (an indoor unit installed in the machine room), the installing environment for the indoor unit is a relatively severe installing environment. That is, it is inferred that in the equipment which is the indoor unit Y, an equipment abnormality occurs at an earlier stage when compared to a standard case. For this reason, the failure sign diagnosis unit 31 performs amendment to increase the threshold. On the other hand, when the equipment is an indoor unit X, if the indoor unit has specifications for a room (an indoor unit installed in a room), the installing environment for the indoor unit is a relatively mild installing environment. Thus, an equipment abnormality does not occur easily when compared to a standard case. For this reason, the failure sign diagnosis unit 31 makes amendment to decrease the threshold.

After the threshold is adjusted as described above, the failure sign diagnosis unit 31 compares the installing environment information of the equipment with the threshold. If the installing environment information of the equipment is equal to the threshold or more (Y in step 305), the failure sign diagnosis unit 31 judges that there is no sign of a failure, that is, the equipment is normal (step 306). On the other hand, if the installing environment information of the equipment does not reach the threshold (N in step 305), the failure sign diagnosis unit 31 judges that there is a sign of a failure, that is, the equipment is abnormal (step 307).

As has been described above, according to the present embodiment, the installing environment estimation device 10 amends as necessary the threshold which is used for judging a sign of a failure of equipment, according to the attribute of the equipment.

As an increasing margin and a decreasing margin of the threshold, optimum values may be set as necessary in accordance with the equipment characteristic. The diagnosis of the failure sign is applicable when the installing environment information is expressed by a numerical value that can be compared with the threshold.

### Embodiment 4.

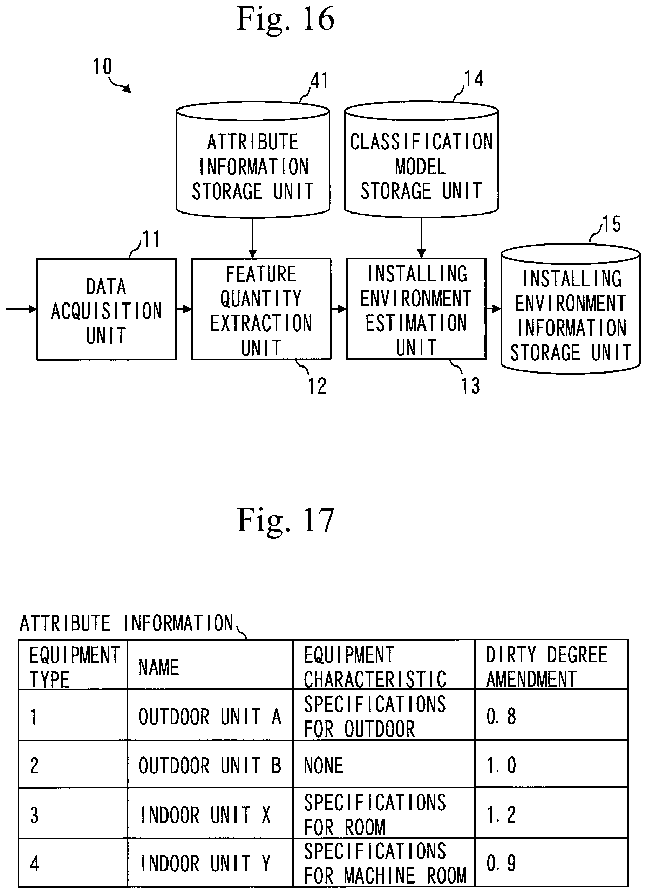

Fig. 16 is a block configuration diagram of an installing environment estimation device according to the present embodiment not covered by the invention. An installing environment estimation device 10 according to the present embodiment has a configuration formed by adding an attribute information storage unit 41 to Embodiment 1.

Fig. 17 is a diagram illustrating a data configuration example of attribute information which is set and registered in advance in the attribute information storage unit 41 according to the present embodiment. The attribute information is set by associating, to an equipment type that identifies a type of equipment, a name of the equipment, an equipment characteristic, and a dirty degree amendment. The equipment characteristic indicates an attribute of the equipment. The dirty degree amendment is an amendment value for amending a feature quantity of the data. The attribute information storage unit 41 is implemented by an HDD 94 mounted in the installing environment estimation device 10. Alternatively, a RAM 93, or an external storage means via a network may be utilized.

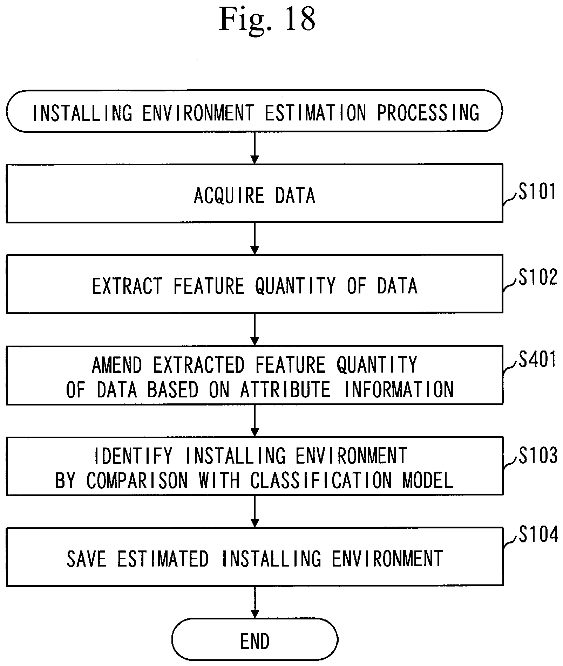

Failure sign diagnosis processing according to the present embodiment will be described with referring to a flowchart illustrated in Fig. 18. The same process as its counterpart in Embodiment 1 is denoted by the same step number, and its description will be omitted as necessary.

When a data acquisition unit 11 acquires data sent from a mobile terminal (step 101), a feature quantity extraction unit 12 analyzes the data to extract a feature quantity of the data (step 102). Equipment which is an installing environment estimation target can be identified by analyzing the acquired data or by designation by a maintenance personnel member. Accordingly, the feature quantity extraction unit 12 refers to the attribute information storage unit 41, so as to amend the extracted feature quantity by multiplying the feature quantity by an amendment value that matches with the equipment (dirty degree amendment) (step 401). Processes beyond step 401 are the same as their counterparts in Embodiment 1, and accordingly their description will be omitted.

For example, since amendment values for an outdoor unit A and an outdoor unit Y are less than 1, the feature quantities extracted by the feature quantity extraction unit 12 are amended to become small values. Meanwhile, since an amendment value for an indoor unit X exceeds 1, the feature quantity extracted by the feature quantity extraction unit 12 is amended to become a large value. In the case of an outdoor unit B, the feature quantity extracted by the feature quantity extraction unit 12 is left unchanged.

In Embodiment 3, instead of amending the installing environment information (a value indicating the installing environment of the equipment) for the purpose of failure sign diagnosis, the threshold to be used for comparison with the installing environment information is adjusted. In the present embodiment, the feature quantity extracted by the feature quantity extraction unit 12 is amended according to an attribute value expressed by the attribute information of the equipment being an estimation target of the installing environment, thereby amending an installing environment of the equipment estimated by an installing environment estimation unit 13. As a result, amendment in this feature quantity extraction unit 12 is reflected in the installing environment of the equipment.

### Embodiment 5.

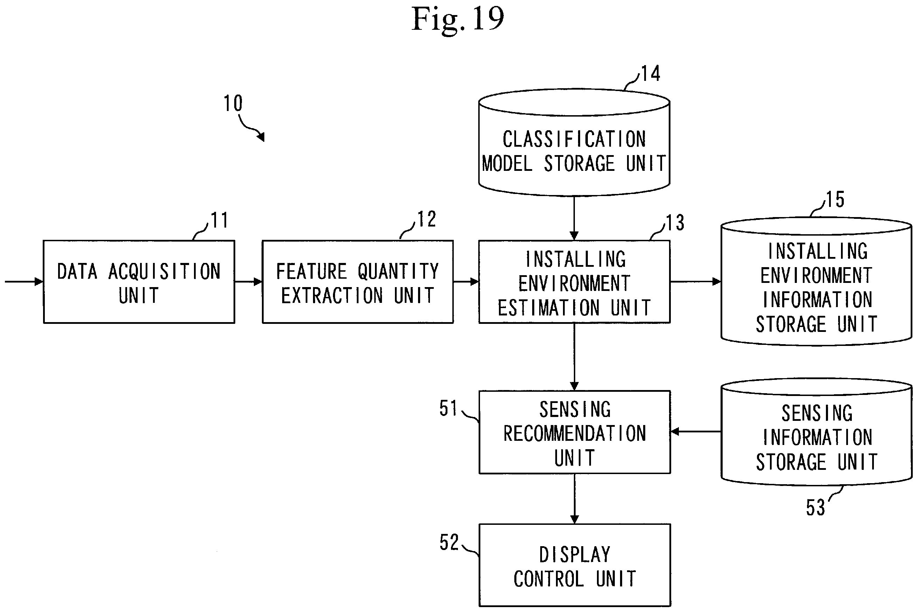

Fig. 19 is a block configuration diagram of an installing environment estimation device according to the present embodiment. An installing environment estimation device 10 according to the present embodiment has a configuration formed by adding a sensing recommendation unit 51, a display control unit 52, and a sensing information storage unit 53 to Embodiment 1.

As stated before, an installing environment estimation unit 13 estimates an installing environment of equipment based on data collected by an apparatus, and saves the estimated installing environment of the equipment to an installing environment information storage unit 15 as installing environment information. The sensing recommendation unit 51 acquires the same installing environment information as that to be saved in the installing environment information storage unit 15, from the installing environment estimation unit 13, and based on the acquired installing environment information (installing environment of the equipment), recommends a method of data collection performed by the apparatus that has collected the data, to a user who operates the apparatus, that is, to a maintenance personnel member. The sensing information storage unit 53 has guide information accumulated in it, which describes the data collection method. The display control unit 52 performs display control of the guide information accumulated in the sensing information storage unit 53.

The sensing recommendation unit 51 and the display control unit 52 are implemented by a cooperative operation of a computer which constitutes the installing environment estimation device 10 and a program which runs in a CPU 91 mounted in the computer. The sensing information storage unit 53 is implemented by an HDD 94 mounted in the installing environment estimation device 10. Alternatively, a RAM 93, or an external storage means via a network may be utilized.

There is a case where, for some reason, the installing environment information indicates an unexpected value. For example, assume that the maintenance personnel member may have photographed equipment for the purpose of estimating a density level of the equipment installed at a certain place. However, sometimes the installing environment estimation device 10 may indicate an unexpected value because, for example, the installing environment cannot be estimated correctly since there is only one piece of equipment being photographed in the photographed image.

In an event where, as described above, the installing environment information is an unexpected value that falls outside an allowable range, or installing environment information itself has not been obtained, the sensing recommendation unit 51 reads guide information that matches with that event out from the sensing information storage unit 53. The guide information includes a message such as an instruction that should be followed when the maintenance personnel member causes the apparatus to collect data, the instruction telling, for example, that photographing might have been performed at an excessively short distance from the equipment and accordingly must be performed more distant from the equipment, the room must be lit more bright for photographing, and so on.

The display control unit 52 notifies the maintenance personnel member of the guide information read by the sensing recommendation unit 51 by, for example, sending an email to the mobile terminal. The maintenance personnel member refers to the notified guide information and, for example, performs photographing again.

According to the present embodiment, the installing environment estimation device 10 can assist the maintenance personnel member by providing him or her with guide information, so that an installing environment of the equipment can be estimated more accurately.

### Embodiment 6.

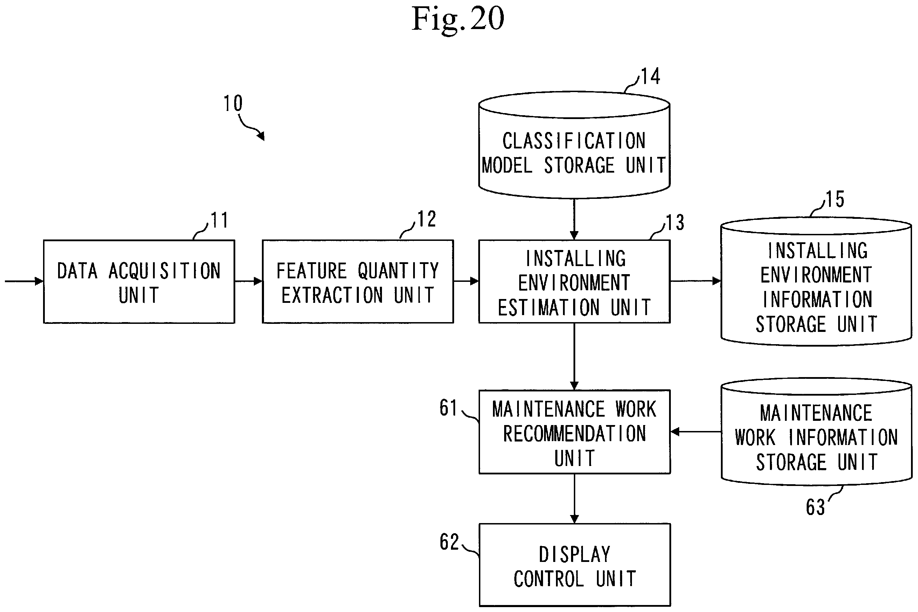

Fig. 20 is a block configuration diagram of an installing environment estimation device according to the present embodiment. An installing environment estimation device 10 in the present embodiment has a configuration formed by adding a maintenance work recommendation unit 61, a display control unit 62, and a maintenance work information storage unit 63 to Embodiment 1. The maintenance work recommendation unit 61 recommends a maintenance method of the equipment to a maintenance personnel member of the equipment, based on an installing environment of the equipment which is estimated by an installing environment estimation unit 13. The maintenance work information storage unit 63 has guide information accumulated in it, which describes the maintenance method for the equipment of the installing environment in accordance with the installing environment of the equipment that needs improvement. The display control unit 62 performs display control of the guide information accumulated in the maintenance work information storage unit 63.

The maintenance work recommendation unit 61 and the display control unit 62 are implemented by a cooperative operation of a computer which constitutes the installing environment estimation device 10 and a program which runs in a CPU 91 mounted in the computer. The maintenance work information storage unit 63 is implemented by an HDD 94 mounted in the installing environment estimation device 10. Alternatively, a RAM 93, or an external storage means via a network may be utilized.

As stated above, in the present embodiment, the installing environment of the equipment is estimated based on the data collected by an apparatus, and the estimated installing environment of the equipment is saved in an installing environment information storage unit 15 as installing environment information. The installing environment information which is the estimated environment information of the equipment may be installing environment information which suggests need of improvement by telling, for example, that the installing environment of the equipment is dirty, that the equipment is densely installed, and so on.

In view of this, when the installing environment information indicates an installing environment that needs improvement, the maintenance work recommendation unit 61 extracts guide information in accordance with the installing environment that needs improvement, from the maintenance work information storage unit 63. Then, the display control unit 62 notifies the maintenance personnel member of the guide information extracted by the maintenance work recommendation unit 61 by, for example, sending an email to a mobile terminal of the maintenance personnel member. The maintenance personnel member performs a maintenance work by referring to the notified guide information. For an installation environment where, for example, the air is dirty, guide information telling, for example, not to forget to check a filter of the equipment, is notified.

According to the present embodiment, the installing environment estimation device 10 can allow the maintenance personnel member to perform a more appropriate maintenance work for the equipment by providing the maintenance personnel member with the guide information.

### Embodiment 7.

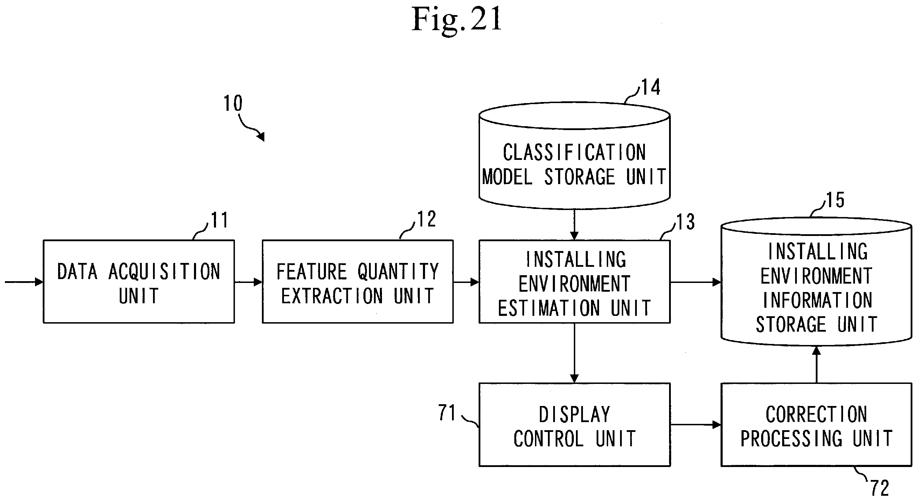

Fig. 21 is a block configuration diagram of an installing environment estimation device according to the present embodiment. An installing environment estimation device 10 according to the present embodiment has a configuration formed by adding a display control unit 71 and a correction processing unit 72 to Embodiment 1. The display control unit 71 performs display control of installing environment information received from an installing environment estimation unit 13. The correction processing unit 72 corrects the installing environment information displayed under the control of the display control unit 71, and updates information stored in an installing environment information storage unit 15. The display control unit 71 and the correction processing unit 72 are implemented by a cooperative operation of a computer which constitutes the installing environment estimation device 10 and a program which runs in a CPU 91 mounted in the computer.

The installing environment estimation unit 13 estimates an installing environment of equipment and saves the estimated installing environment to the installing environment information storage unit 15 as installing environment information.

Note that a feature quantity extraction unit 12 cannot always extract a feature quantity from data correctly. The installing environment is not always classified by a classification model correctly.

Therefore, there will possibly be room for correction in the estimated installing environment of the equipment.

Hence, the display control unit 71 performs display control of the installing environment information received from the installing environment estimation unit 13. For example, the display control unit 71 displays the installing environment information to a display 97. Alternatively, the display control unit 71 may display the installing environment information to an administrator's terminal by sending it via a network. When the administrator has corrected the installing environment information, the correction processing unit 72 receives its change content and corrects the installing environment information registered in the installing environment information storage unit 15.

According to the present embodiment, the installing environment estimation device 10 can manually change the installing environment information stored in the installing environment information storage unit 15, in the above manner.

### Embodiment 8.

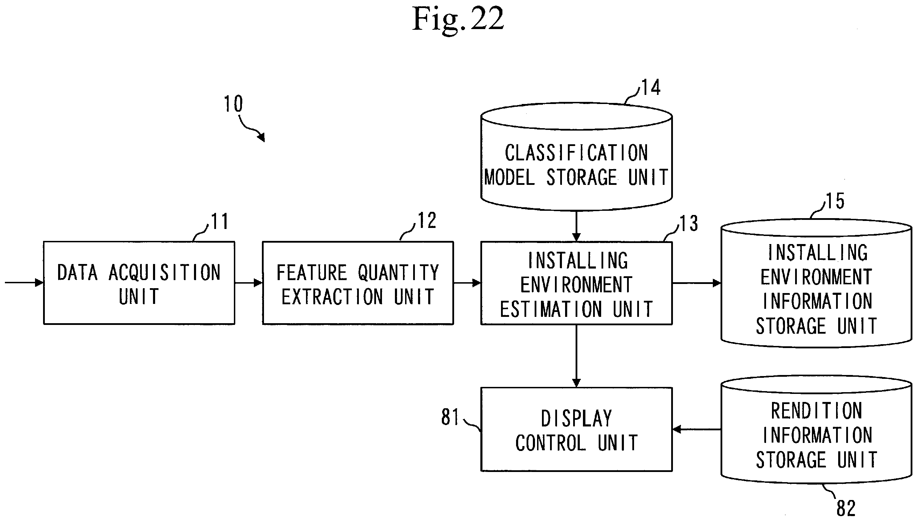

Fig. 22 is a block configuration diagram of an installing environment estimation device according to the present embodiment. An installing environment estimation device 10 according to the present embodiment has a configuration formed by adding a display control unit 81 and a rendition information storage unit 82 to Embodiment 1. CAD data of a building as a facility and of equipment installed in the building is stored in the rendition information storage unit 82. The display control unit 81 utilizes the CAD data stored in the rendition information storage unit 82 to perform display control so as to schematically display installing environment information which is received from an installing environment estimation unit 13. The display control unit 81 is implemented by a cooperative operation of a computer which constitutes the installing environment estimation device 10 and a program which runs in a CPU 91 mounted in the computer. The rendition information storage unit 82 is implemented by an HDD 94 mounted in the installing environment estimation device 10. Alternatively, a RAM 93, or an external storage means via a network may be utilized.

The display control unit 71 in Embodiment 7 displays the installing environment information in the form of text data composed of, for example, numerical values. The display control unit 81 of the present embodiment displays the installing environment information by utilizing the CAD data so that the installing environment information (values representing the installing environment of the equipment) can be easily, visually grasped.

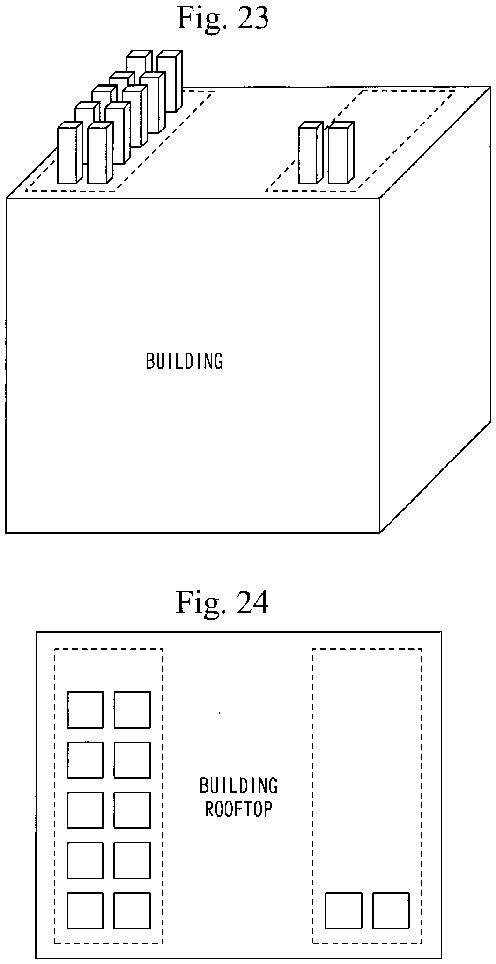

Fig. 23 is a diagram illustrating an example of a case where the installing environment information is displayed three-dimensionally. Fig. 23 illustrates, as an installing environment of equipment, a density level of the equipment installed on a building rooftop. According to Fig. 23, it can be visually confirmed that equipment are densely set on a left side in the drawing of the building rooftop, while equipment are not dense on a right side in the drawing of the building rooftop.

In Fig. 23, three-dimensional CAD data is utilized. As opposed to this, Fig. 24 is a diagram illustrating an example of a case where the installing environment information is displayed with using two-dimensional CAD data. Fig. 24 illustrates, as an installing environment of the equipment, a density level of the equipment installed on the building rooftop, just as in Fig. 23. The display control unit 81 displays the installing environment information using the CAD data illustrated in Fig. 24. Therefore, it can be visually confirmed that equipment are densely set on the left side in the drawing of the building rooftop, while equipment are not dense on the right side in the drawing of the building rooftop.

In the present embodiment, the rendition information storage unit 82 is provided which stores CAD data of the building and of the equipment. Alternatively, existing data which exists in, for example, Building Information Modeling (MIM), may be utilized effectively.

In each of the embodiments described above, an estimation method of the installing environment of the equipment and processing that utilizes the installing environment (installing environment information) of the equipment have been described. The individual embodiments may be combined and practiced as necessary so long as the combination is feasible.

In the present embodiment, equipment installed in a building has been described as an example of management target equipment. Alternatively, the management target is not limited to equipment in a building. The present embodiment can also be applied for estimation of an installing environment of equipment which is installed at a place other than in a building.

### Embodiment 9.

Embodiment 9 supplements the hardware configuration of the installing environment estimation device 10 of Embodiments 1 to 8.

The functions of the installing environment estimation device 10 described in Embodiments 1 to 8 are implemented by a program. Alternatively, functions of an installing environment estimation device may be implemented by hardware.

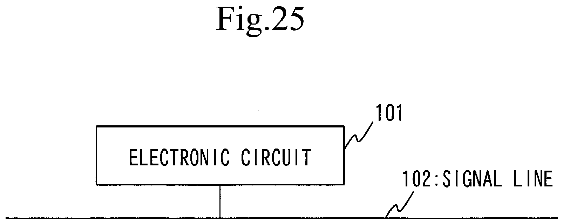

Fig. 25 illustrates a configuration in which the functions of the installing environment estimation device are implemented by hardware. An electronic circuit 101 of Fig. 25 is a dedicated electronic circuit that implements the functions of the data acquisition unit 11, feature quantity extraction unit 12, installing environment estimation unit 13, failure sign diagnosis unit 31, sensing recommendation unit 51, display control units 52, 62, 71, and 81, maintenance work recommendation unit 61, and correction processing unit 72 of the installing environment estimation device 10.

The electronic circuit 101 is connected to a signal line 102. The electronic circuit 101 is specifically a single circuit, a composite circuit, a programmed processor, a parallel-programmed processor, a logic IC, a GA, an ASIC, or an FPGA. Note that GA stands for Gate Array, ASIC for Application Specific Integrated Circuit, and FPGA for Field-Programmable Gate Array.

The functions of the function constituent elements of the installing environment estimation device may be implemented by one electronic circuit, or may be implemented by a plurality of electronic circuits through distribution. Also, some of the functions of the function constituent elements of the installing environment estimation device may be implemented by an electronic circuit, and remaining functions may be implemented by software.

The CPU and the electronic circuit 101 are each called processing circuitry. The functions of the data acquisition unit 11, feature quantity extraction unit 12, installing environment estimation unit 13, failure sign diagnosis unit 31, sensing recommendation unit 51, display control units 52, 62, 71, and 81, maintenance work recommendation unit 61, and correction processing unit 72 of the installing environment estimation device may be implemented by processing circuitry.

Note that each constituent element of the installing environment estimation device 10 described in Embodiments 1 to 8 corresponds to a means as follows.
(1) The data acquisition unit 11 data corresponds to an acquisition means.
(2) The feature quantity extraction unit 12 corresponds to an extraction means.
(3) The installing environment estimation unit 13 corresponds to an estimation means.
(4) The failure sign diagnosis unit 31 corresponds to a failure sign diagnosis means.
(5) The sensing recommendation unit 51 corresponds to a recommendation means.
(6) The maintenance work recommendation unit 61 corresponds to a recommendation means.
(7) The correction processing unit 72 corresponds to a correction means.
(8) The display control unit 81 corresponds to a display control means.

### Reference Signs List

10: installing environment estimation device; 11: data acquisition unit; 12: feature quantity extraction unit; 13: installing environment estimation unit; 14: classification model storage unit; 15: installing environment information storage unit; 21: installing environment estimation information storage unit; 31: failure sign diagnosis unit; 32, 41: attribute information storage unit; 33: diagnosis rule storage unit; 51: sensing recommendation unit; 52, 62, 71, 81: display control unit; 53: sensing information storage unit; 61: maintenance work recommendation unit; 63: maintenance work information storage unit; 72: correction processing unit; 82: rendition information storage unit; 91: CPU; 92: ROM; 93: RAM; 94: hard disk drive (HDD); 95: mouse; 96: keyboard; 97: display; 98: input/output controller; 100: internal bus; 101: electronic circuit; 102: signal line.

## Claims

1. An installing environment estimation device (10) comprising:
acquisition means (11) for acquiring data collected by a portable apparatus and concerning equipment being a monitoring target;
extraction means (12) for analyzing the data acquired by the acquisition means (11), and thereby extracting a feature quantity of the data;
estimation means (13) for collating the feature quantity of the data which is extracted by the extraction means (12) with a classification model being set in advance for each item of the feature quantity of an individual apparatus, and thereby estimating an installing environment of the equipment;
attribute information storage means (32) for storing attribute information of the equipment; wherein the attribute information is set by associating, to an equipment type that identifies a type of the equipment, a name of the equipment and an equipment characteristic, where the equipment characteristic indicates an attribute of the equipment; and
failure sign diagnosis means (31) for correcting a threshold to be used for comparison with the installing environment of the equipment, according to the equipment characteristic that matches with the equipment type of the equipment and a rule that matches with the equipment characteristic by referring to a diagnosis rule storage unit (33), wherein the equipment characteristic includes the following values: specifications for outdoors, specifications for room and specifications for machine room; and for diagnosing a sign of a failure of the equipment by comparing the installing environment of the equipment which is estimated by the estimation means (13), with the threshold.

2. The installing environment estimation device (10) according to claim 1, comprising
installing environment estimation information storage means (21) for storing installing environment estimation information that associates, to an environment item indicating the installing environment of the equipment, an apparatus to collect data which is to be used for estimation of the environment item, and a feature quantity which is to be extracted from the data collected by the apparatus,
wherein the extraction means (12) extracts the feature quantity of the data by referring to the installing environment estimation information.

3. The installing environment estimation device (10) according to claim 1,
wherein the extraction means (12) corrects the feature quantity of the data according to an attribute value of attribute information of the equipment.

4. The installing environment estimation device (10) according to claim 1, comprising
recommendation means (51) for recommending a method of data collection performed by the apparatus to a user who operates the apparatus, based on the installing environment of the equipment which is estimated by the estimation means (13).

5. The installing environment estimation device (10) according to claim 1, comprising
recommendation means (61) for recommending a maintenance method of the equipment to a maintenance personnel member of the equipment, based on the installing environment of the equipment which is estimated by the estimation means (13).

6. The installing environment estimation device (10) according to claim 1, comprising
correction means (72) for correcting the installing environment of the equipment which is estimated by the estimation means (13).

7. The installing environment estimation device (10) according to claim 1, comprising
display control means (81) for performing control so as to schematically display the installing environment of the equipment which is estimated by the estimation means (13).

8. The installing environment estimation device (10) according to claim 1,
wherein the apparatus is a sensor mounted in a mobile terminal carried by a maintenance personnel member or a camera mounted in the mobile terminal carried by the maintenance personnel member.

9. A program which causes a computer to execute:
an acquisition process of acquiring data collected by a portable apparatus and concerning equipment being a monitoring target;
an extraction process of analyzing the data acquired by the acquisition process, and thereby extracting a feature quantity of the data;
an estimation process of collating the feature quantity of the data which is extracted by the extraction process with a classification model being set in advance for each item of the feature quantity of an individual apparatus, and thereby estimating an installing environment of the equipment;
an attribute information storage process of storing attribute information of the equipment; wherein the attribute information is set by associating, to an equipment type that identifies a type of the equipment, a name of the equipment or an equipment characteristic, where the equipment characteristic indicates an attribute of the equipment; and
a failure sign diagnosis process of correcting the threshold to be used for comparison with the installing environment of the equipment, according to the equipment characteristic that matches with the equipment type of the equipment and a rule that matches with the equipment characteristic, wherein the equipment characteristic includes the following values: specifications for outdoors, specifications for room and specifications for machine room; and diagnosing a sign of a failure of the equipment by comparing the installing environment of the equipment, with the threshold.

## Patentansprüche

1. Installationsumgebung-Schätzeinrichtung (10), umfassend:
ein Erwerbungsmittel (11) zum Erwerben von Daten, die von einer tragbaren Vorrichtung gesammelt werden, und Ausrüstung betreffen, welche ein Überwachungsziel ist;
ein Extrahiermittel (12) zum Analysieren der von den Erwerbungsmitteln (11) erworbenen Daten, und dadurch Extrahieren einer Merkmalsmenge der Daten;
ein Schätzmittel (13) zum Kollationieren der Merkmalsmenge der Daten, die durch das Extrahiermittel (12) extrahiert werden, mit einem Klassifizierungsmodell, das im Voraus für jedes Element der Merkmalsmenge einer einzelnen Vorrichtung festgelegt wird, und dadurch Schätzen einer Installationsumgebung der Ausrüstung;
ein Attributinformationen-Speichermittel (32) zum Speichern von Attributinformationen der Ausrüstung; wobei die Attributinformationen festgelegt werden, indem einem Ausrüstungstyp, der einen Typ der Ausrüstung identifiziert, ein Name der Ausrüstung und eine Ausrüstungscharakteristik zugeordnet werden, wobei die Ausrüstungscharakteristik ein Attribut der Ausrüstung angibt; und
ein Fehleranzeichen-Diagnosemittel (31) zum Korrigieren eines Schwellenwerts, der zum Vergleichen mit der Installationsumgebung der Ausrüstung zu nutzen ist, gemäß der Ausrüstungscharakteristik, die mit dem Ausrüstungstyp der Ausrüstung übereinstimmt, und einer Regel, die mit der Ausrüstungscharakteristik übereinstimmt, indem auf eine Diagnoseregel-Speichereinheit (33) Bezug genommen wird, wobei die Ausrüstungscharakteristik die folgenden Werte umfasst: Spezifikationen für einen Außenbereich, Spezifikationen für einen Raum und Spezifikationen für einen Maschinenraum; und zum Diagnostizieren eines Anzeichens eines Fehlers der Ausrüstung durch Vergleichen der Installationsumgebung der Ausrüstung, die durch das Schätzmittel (13) geschätzt wird, mit dem Schwellenwert.

2. Installationsumgebung-Schätzeinrichtung (10) nach Anspruch 1, umfassend:
ein Installationsumgebung-Schätzinformationen-Speichermittel (21) zum Speichern von Installationsumgebung-Schätzinformationen, die einem Umgebungselement, das die Installationsumgebung der Ausrüstung anzeigt, eine Vorrichtung zum Sammeln von Daten, die zum Schätzen des Umgebungselements genutzt werden sollen, und eine Merkmalsmenge, die aus den von der Vorrichtung gesammelten Daten extrahiert werden soll, zuordnen,
wobei das Extrahierungsmittel (12) die Merkmalsmenge der Daten durch Bezugnehmen auf die Installationsumgebung-Schätzinformationen extrahiert.

3. Installationsumgebung-Schätzeinrichtung (10) nach Anspruch 1,
wobei das Extrahiermittel (12) die Merkmalsmenge der Daten gemäß einem Attributwert der Attributinformationen der Ausrüstung korrigiert.

4. Installationsumgebung-Schätzeinrichtung (10) nach Anspruch 1, umfassend:
ein Empfehlungsmittel (51), um einem Benutzer, der die Vorrichtung bedient, auf der Grundlage der Installationsumgebung der Vorrichtung, die von dem Schätzmittel (13) geschätzt wird, ein Verfahren zur Datensammlung zu empfehlen, das von der Vorrichtung durchgeführt wird.

5. Installationsumgebung-Schätzeinrichtung (10) nach Anspruch 1, umfassend:
ein Empfehlungsmittel (61) zum Empfehlen eines Wartungsverfahrens der Ausrüstung an ein Mitglied des Wartungspersonals der Ausrüstung auf der Grundlage der Installationsumgebung der Ausrüstung, die von der Schätzeinrichtung (13) geschätzt wird.

6. Installationsumgebung-Schätzeinrichtung (10) nach Anspruch 1, umfassend:
ein Korrekturmittel (72) zum Korrigieren der Installationsumgebung der Ausrüstung, die von dem Schätzmittel (13) geschätzt wird.

7. Installationsumgebung-Schätzeinrichtung (10) nach Anspruch 1, umfassend:
ein Anzeigesteuermittel (81) zum Durchführen einer Steuerung, um die Installationsumgebung der Ausrüstung, die durch das Schätzmittel (13) geschätzt wird, schematisch anzuzeigen.

8. Installationsumgebung-Schätzeinrichtung (10) nach Anspruch 1,
wobei es sich bei der Vorrichtung um einen Sensor handelt, der in einem von einem Mitglied des Wartungspersonals mitgeführten mobilen Endgerät angebracht ist, oder um eine Kamera, die in dem von dem Mitglied des Wartungspersonals mitgeführten mobilen Endgerät angebracht ist.

9. Programm, das einen Computer veranlasst, auszuführen:
einen Erwerbungsprozess des Erwerbens von Daten, die von einer tragbaren Vorrichtung gesammelt werden, und Ausrüstung betreffen, die ein Überwachungsziel ist;
einen Extrahierungsprozess des Analysierens der durch den Erwerbungsprozess erworbenen Daten, um dadurch eine Merkmalsmenge der Daten zu extrahieren;
einen Schätzprozess des Kollationierens der Merkmalsmenge der Daten, die durch den Extrahierungsprozess extrahiert werden, mit einem Klassifizierungsmodell, das im Voraus für jedes Element der Merkmalsmenge einer einzelnen Vorrichtung festgelegt wird, und dadurch Schätzen einer Installationsumgebung der Ausrüstung;
einen Attributinformationen-Speicherprozess des Speicherns von Attributinformationen der Ausrüstung; wobei die Attributinformationen festgelegt werden, indem einem Ausrüstungstyp, der einen Typ der Ausrüstung identifiziert, ein Name der Ausrüstung oder eine Ausrüstungscharakteristik zugeordnet wird, wobei die Ausrüstungscharakteristik ein Attribut der Ausrüstung angibt; und
einen Fehleranzeichen-Diagnoseprozess des Korrigierens des Schwellenwerts, der zum Vergleichen mit der Installationsumgebung des Geräts zu nutzen ist, gemäß der Ausrüstungscharakteristik, die mit dem Ausrüstungstyp der Ausrüstung übereinstimmt, und einer Regel, die mit der Ausrüstungscharakteristik übereinstimmt, wobei die Ausrüstungscharakteristik die folgenden Werte umfasst: Spezifikationen für einen Außenbereich, Spezifikationen für einen Raum und Spezifikationen für einen Maschinenraum; und zum Diagnostizieren eines Anzeichens eines Fehlers der Ausrüstung durch Vergleichen der Installationsumgebung der Ausrüstung mit dem Schwellenwert.

## Revendications

1. Dispositif d'estimation d'un environnement d'installation (10) comprenant :
des moyens d'acquisition (11) pour acquérir des données collectées par un appareil portable et concernant un équipement qui est une cible de surveillance ;
des moyens d'extraction (12) pour analyser les données acquises par les moyens d'acquisition (11) et extraire ainsi une quantité de caractéristiques des données ;
des moyens d'estimation (13) pour rassembler la quantité de caractéristiques des données extraites par les moyens d'extraction (12) avec un modèle de classification défini à l'avance pour chaque élément de la quantité de caractéristiques d'un appareil individuel, et ainsi estimer l'environnement d'installation de l'équipement ;
des moyens de stockage d'informations d'attributs (32) pour stocker des informations d'attributs de l'équipement ; les informations d'attributs sont définies en associant, à un type d'équipement qui identifie un type d'équipement, un nom de l'équipement et une caractéristique de l'équipement, la caractéristique de l'équipement indiquant un attribut de l'équipement ; et
un moyen de diagnostic de signe de défaillance (31) pour corriger un seuil à utiliser pour la comparaison avec l'environnement d'installation de l'équipement, en fonction de la caractéristique de l'équipement qui correspond au type de l'équipement et d'une règle qui correspond à la caractéristique de l'équipement en se référant à une unité de stockage de règles de diagnostic (33), dans lequel la caractéristique de l'équipement comprend les valeurs suivantes : spécifications pour l'extérieur, spécifications pour la salle et spécifications pour la salle des machines ; et pour diagnostiquer un signe de défaillance de l'équipement en comparant l'environnement d'installation de l'équipement, qui est estimé par le moyen d'estimation (13), au seuil.

2. Dispositif d'estimation d'un environnement d'installation (10) selon la revendication 1, comprenant
l'installation d'un moyen de stockage (21) des informations d'estimation de l'environnement d'installation qui associe, à un élément d'environnement indiquant l'environnement d'installation de l'équipement, un appareil de collecte de données à utiliser pour l'estimation de l'élément d'environnement, et une quantité de caractéristiques à extraire des données collectées par l'appareil,
dans lequel le moyen d'extraction (12) extrait la quantité de caractéristiques des données en se référant aux informations d'estimation de l'environnement d'installation.

3. Dispositif d'estimation d'un environnement d'installation (10) selon la revendication 1,
dans lequel le moyen d'extraction (12) corrige la quantité de caractéristiques des données en fonction d'une valeur d'attribut des informations d'attribut de l'équipement.

4. Dispositif d'estimation d'un environnement d'installation (10) selon la revendication 1, comprenant
des moyens de recommandation (51) pour recommander un procédé de collecte de données effectué par l'appareil à un utilisateur qui utilise l'appareil, sur la base de l'environnement d'installation de l'équipement qui est estimé par les moyens d'estimation (13).

5. Dispositif d'estimation d'un environnement d'installation (10) selon la revendication 1, comprenant
des moyens de recommandation (61) pour recommander un procédé d'entretien de l'équipement à un membre du personnel d'entretien de l'équipement, sur la base de l'environnement d'installation de l'équipement qui est estimé par les moyens d'estimation (13).

6. Dispositif d'estimation d'un environnement d'installation (10) selon la revendication 1, comprenant
des moyens de correction (72) pour corriger l'environnement d'installation de l'équipement qui est estimé par les moyens d'estimation (13).

7. Dispositif d'estimation d'un environnement d'installation (10) selon la revendication 1, comprenant
des moyens de commande d'affichage (81) pour effectuer une commande afin d'afficher schématiquement l'environnement d'installation de l'équipement qui est estimé par les moyens d'estimation (13).

8. Dispositif d'estimation d'un environnement d'installation (10) selon la revendication 1,
dans lequel l'appareil est un capteur monté dans un terminal mobile porté par un membre du personnel de maintenance ou une caméra montée dans le terminal mobile porté par le membre du personnel de maintenance.

9. Programme qui amène un ordinateur à exécuter :
un processus d'acquisition de données collectées par un appareil portable et concernant un équipement qui est une cible de surveillance ;
un processus d'extraction consistant à analyser les données acquises par le processus d'acquisition et à extraire ainsi une quantité de caractéristiques des données ;
un processus d'estimation consistant à rassembler la quantité de caractéristiques des données extraites par le processus d'extraction avec un modèle de classification défini à l'avance pour chaque élément de la quantité de caractéristiques d'un appareil individuel, et ainsi estimer un environnement d'installation de l'équipement ;
un processus de stockage d'informations d'attributs pour stocker des informations d'attributs de l'équipement ; dans lequel les informations d'attributs sont définies en associant, à un type d'équipement qui identifie un type d'équipement, un nom de l'équipement et une caractéristique de l'équipement, dans lequel la caractéristique de l'équipement indique un attribut de l'équipement ; et
un processus de diagnostic de signe de défaillance consistant à corriger le seuil à utiliser pour la comparaison avec l'environnement d'installation de l'équipement, en fonction de la caractéristique de l'équipement qui correspond au type d'équipement de l'équipement et d'une règle qui correspond à la caractéristique de l'équipement, dans lequel la caractéristique de l'équipement inclut les valeurs suivantes : spécifications pour l'extérieur, spécifications pour la salle et spécifications pour la salle des machines ; et le diagnostic d'un signe de défaillance de l'équipement en comparant l'environnement d'installation de l'équipement au seuil.
